# EUROPEAN PATENT SPECIFICATION

(11) **EP 0 428 747 B1**
(45) Date of publication and mention of the grant of the patent: **07.09.1994**
(21) Application number: 90907490.8
(22) Date of filing: 23.05.1990
(51) Int. Cl.: C02F 3/08, C02F 3/10

(54) **METHOD AND APPARATUS OF FILTERING MEDIUM CIRCULATION TYPE FOR PURIFYING CONTAMINATED WATER**
VERFAHREN UND VORRICHTUNG VOM TYP DES ZIRKULIERENDEN FILTERMEDIUMS ZUR REINIGUNG VON VERUNREINIGTEM WASSER
PROCEDE ET APPAREIL DU TYPE A CIRCULATION DE MILIEU FILTRANT POUR LA PURIFICATION D'EAU CONTAMINEE

(30) Priority: 26.05.1989 JP 134314/89
(43) Date of publication of application: 29.05.1991
(73) Proprietor: IWAI, Isamu, Kanagawa 230 (JP); NIRASAWA, Chikatsu, Tokyo 131 (JP)
(72) Inventor: IWAI, Isamu, Kanagawa 230 (JP); NIRASAWA, Chikatsu, Tokyo 131 (JP)
(74) Representative: Gold, Tibor Z.
(86) International application number: JP9000659
(87) International publication number: WO9014313

(56) References cited:
- JP-A-57 132 592
- JP-A-62 262 794
- JP-B- 612 440
- JP-B- 6 340 597
- JP-Y- 6 242 799
- JP-Y- 6 244 799
- No further relevant documents have been disclosed.

## Description

### TECHNICAL FIELD

The present invention relates to improvements in a sewage disposal method employing a filter system, and an apparatus for carrying out the same.

### BACKGROUND ART

A sewage disposal method employing a filter system purifies sewage by the bacterial action of aerobic bacteria or anaerobic bacteria incubated in a filter bed formed by assembling a plurality of filter media in a septic tank.

This sewage disposal method, however, has a problem that the purifying ability of the apparatus is deteriorated by sludge that clogs the filter media, hence, the filter bed. In this description, the term "sludge" refers to various solids separated from sewage.

A conventional method to solve such a problem employs filter media hard to be clogged and another conventional method employs a preparatory sewage disposal process to reduce the sludge concentration of sewage and treats the diluted sewage for final sewage disposal.

The conventional method employing a preparatory sewage disposal process requires considerably troublesome work for preparatory sewage disposal and, even if the sludge concentration of sewage is reduced by the preparatory sewage disposal process, the filter bed is clogged unavoidably with sludge and, eventually, the filter media must be replaced with new ones or cleaned periodically, which requires troublesome, heavy work.

Various improved filter media have been proposed. Japanese Patent No.1 343 032 (Japanese Patent Publication (Kokoku) No. 61-2440) discloses a buoyant, spherical filter medium hard to entangle itself with other ones. Although fairly satisfactory in ability to suppress clogging, even this filter medium is unable to prevent clogging.

JP-A-62/262 794 discloses a waste-water treatment tank comprising inner and outer cylinders in which micro-organism-carrying particles are scattered, and an aerator for creating an overall flow within both cylinders to circulate the particles uniformly around the inner and then the outer cylinders.

JP-Y2-62/42799 discloses a further treatment tank, in which filter media are normally provided between an inner tubular member and the outer walls of the tank for trapping solid substances in waste-water. Water treatment is intermittently suspended when the filter media become saturated, and the entire filter bed is circulated both through and around the inner tubular member for separating the solid substances from the filter media.

A similar treatment tank is provided for use in a method described in JP-B2-63/40597, in which an up flow of bubbles through a granular filter bed and a down flow of water to the bed are generated by the circulation of water through an inner tubular member within the tank.

It is an object of the invention to provide a sewage disposal method capable of effectively preventing the clogging of filter medium and of always enabling efficient sewage disposal, and to provide an apparatus for carrying out the sewage disposal method.

### DISCLOSURE OF THE METHOD

The object of the invention can be achieved by a sewage disposal method employing a septic tank containing many buoyant filtering media to form a filter bed, and utilising bacteria propagated in the filter bed, said sewage disposal method comprising:
forming at least one elongate circulation passage by means of at least one tube or pair of partition walls in the septic tank extending from an end of the filter bed to an opposite end thereof for circulating the filter media therethrough, and
generating sewage currents in the circulation passage by current generating means to circulate the filter media through the circulation passage, characterised by circulating the filter media sequentially several at a time through the at least one circulation passage by causing the filter bed to roll gradually as a result of the sewage currents and respective ones of the filter media floating at said one end of the filter bed to flow into one end of the at least one circulation passage, collecting sludge precipitated from the filter media circulating within the circulation passage, and thereafter dispensing the filter media from the other end of the at least one circulation passage to said opposite end of the filter bed, wherein sludge is prevented by means of the at least one circulation passage from dispersing within the septic tank and only a small proportion of sludge is precipitated outside the at least one circulation passage.

This method has been developed on the basis of knowledge that although continuously moving the filter media prevents the clogging of the filter media effectively, simple confused movement of the filter media disperses sludge fallen off the filter media in the septic tank, deteriorating the sewage purifying efficiency. The method in accordance with the present invention efficiently makes the filter media move continuously and regularly to prevent the clogging of the filter media effectively for continuous efficient sewage purification.

The invention also provides apparatus for carrying out the method including a septic tank containing many buoyant filter media to form a filter bed, said circulating filter type sewage disposal apparatus comprising:
means comprising at least one pair of partition walls defining at least one elongate circulation passage for the filter media positioned to extend from an end of the filter bed to an opposite end thereof in the septic tank; and
current generating means for generating sewage currents to circulate the filter media through the circulation passage,
characterised in that the circulation passage is formed horizontally by a plurality of partition walls set in the septic tank, and the current generating means comprise vibrating means for vibrating the filter media provided in the circulation passage to generate sewage currents reverse to a flowing direction of incoming sewage in the circulation passage, so as to circulate the filter media sequentially several at a time through the at least one circulation passage, and in that collection means are provided for sludge precipitated from the filter media circulating within the filter passage, the collection means comprising pit means provided at a predetermined distance downstream from the vibrating means, wherein the arrangement is such that sludge is prevented by means of the at least one circulation passage from dispersing within the septic tank and only a small proportion of sludge is precipitated outside the at least one circulation passage.

In carrying out the method, the circulation passage may be defined by a tubular member having open opposite ends and disposed in a vertical position. This method is advantageous in that sludge fallen off the filter media can be easily disposed of. This method is carried out by a circulating filter type sewage disposal apparatus employing a tubular member having open opposite ends and defining a vertical circulation passage. The method is carried out also by a circulating filter type sewage disposal apparatus provided with a sludge settling pit formed below a circulation passage.

The method employing the vertical circulation passage is able to generate sewage currents through the circulation passage by the agency of the buoyancy of bubbles supplied through the lower end of the circulation passage into the same and to remove sludge efficiently from the filter media by vibrations applied to the filter media by the bubbles. Thus, the method is able to achieve both generating sewage currents and removing sludge from the filter media. This method is carried out by a circulating filter type sewage disposal apparatus capable of supplying bubbles through the lower end of a circulation passage into the same so that the bubbles rise through the circulation passages to generate sewage currents by the agency of their buoyancy.

Furthermore, the method can be carried out by forming a lateral circulation passage by a plurality of partition walls set in a septic tank and forming sewage currents in the circulation passage in a direction reverse to the flowing direction of the sewage. This method is particularly suitable for application to the large-scale purification of river water. This method is carried out by a circulating filter type sewage disposal apparatus having a septic tank provided with a plurality of partition walls arranged in the septic tank so as to form a lateral circulation passage in which sewage currents are generated in a direction reverse to the flowing direction of the sewage.

This method may employ a single lateral circulation passage formed in the central portion of the septic tank or may employ a pair of lateral circulation passages formed respectively along the opposite side walls of the septic tank. This method is carried out by a circulating filter type sewage disposal apparatus having a septic tank provided with a single lateral circulation passage in the central portion thereof or a circulating filter type sewage disposal apparatus having a septic tank provided with a pair of lateral circulation passages formed respectively along the opposite side walls thereof. To remove sludge efficiently from the filter media and to dispose of the sludge efficiently, it is possible to employ a circulating filter type sewage disposal apparatus provided with vibrating means for vibrating the filter media in a circulation passage or passages, and a sludge settling pit disposed after the vibrating means with respect to the flowing direction of the sewage currents at a predetermined distance from the vibrating means.

### BRIEF DESCRIPTION OF THE DRAWINGS

Figure 1 is a schematic sectional view of a circulating filter type sewage disposal apparatus in a first embodiment according to the present invention;
Figure 2 is a schematic sectional view taken on line II-II in Fig. 1;
Figure 3 is a schematic sectional view of a circulating filter type sewage disposal apparatus in a second embodiment according to the present invention;
Figure 4 is a schematic sectional view of a circulating filter type sewage disposal apparatus in a third embodiment according to the present invention;
Figure 5 is a schematic plan view of a circulating filter type sewage disposal apparatus in a fourth embodiment according to the present invention;
Figure 6 is a schematic sectional view taken on line VI-VI in Fig. 5;
Figure 7 is a schematic sectional view taken on line VII-VII in Fig. 5;
Figure 8 is a schematic perspective view of the circulating filter type sewage disposal apparatus in a fourth embodiment according to the present invention;
Figure 9 is a schematic plan view showing the disposition of the circulating filter type sewage disposal apparatus in a fourth embodiment according to the present invention;
Figure 10 is a diagrammatic sectional view of a river; and
Figure 11 is a schematic plan view of a circulating filter type sewage disposal apparatus in a fifth embodiment according to the present invention.

### BEST MODE FOR CARRYING OUT THE INVENTION

Preferred embodiments of the present invention will be described hereinafter with reference to the accompanying drawings, in which like or corresponding parts denoted by the same reference characters throughout and the duplicate description thereof will be omitted.

Although the invention will be described as applied to circulating filter type sewage disposal apparatus of aeration type, the present invention is not limited thereto in its application, but may be applied to those of an anaerobic type.

### First Embodiment

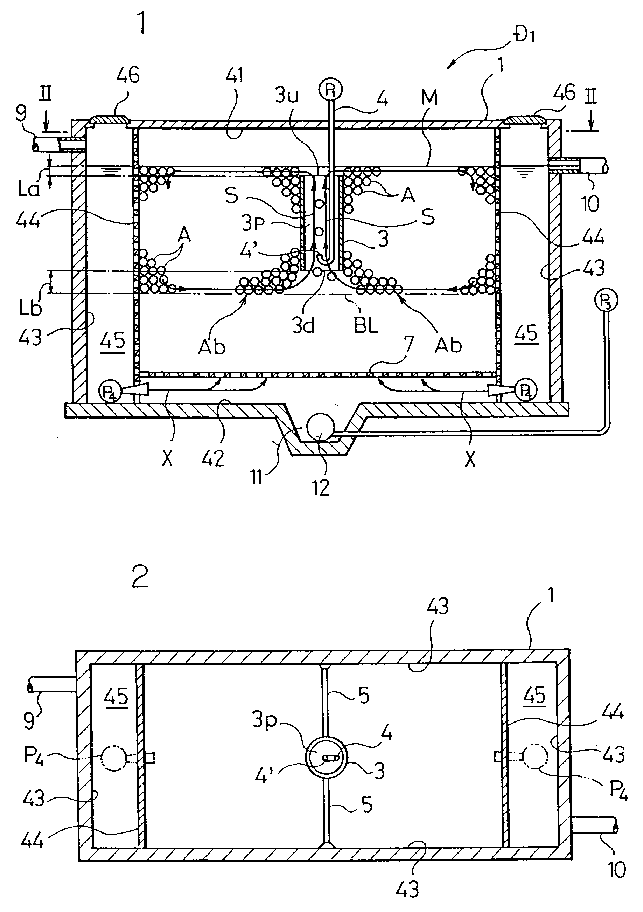

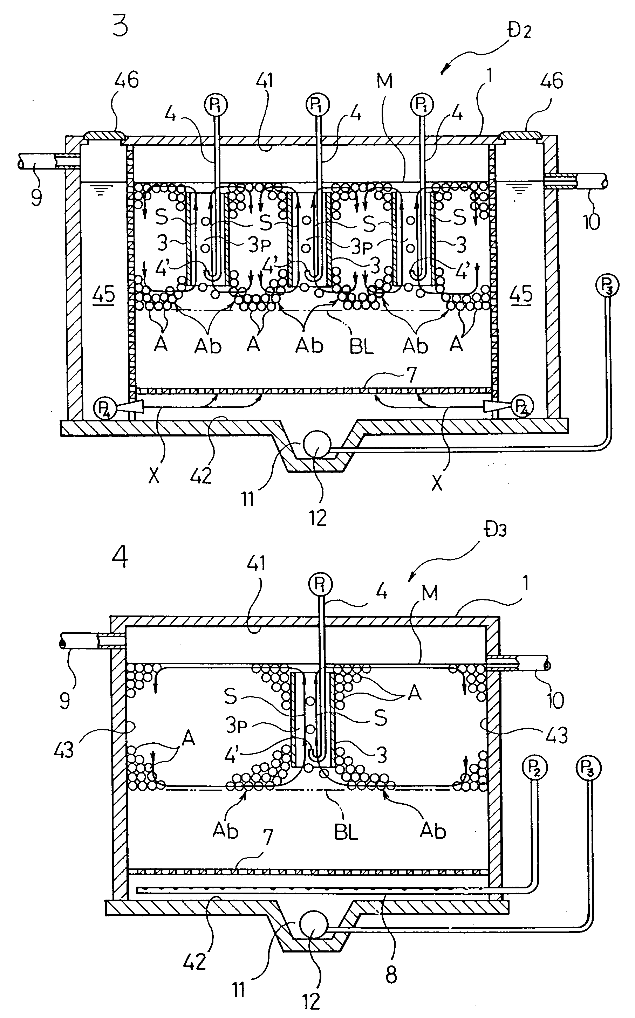

As shown in Figs. 1 and 2, a circulating filter type sewage disposal apparatus D1 in a first embodiment according to the present invention has a septic tank 1 provided with a circulation passage 3p along which filter media A are circulated.

The filter media A, as will be obvious from the description below, must be buoyant ones having a specific gravity in the range of 0.95 to 0.98, which is slightly smaller than that of the sewage, and an appropriate buoyancy, capable of floating in the sewage, and hard to entangle themselves with each other. The spherical filter medium disclosed in Japanese Patent No. 1343032 (Japanese Patent Publication (Kokoku) No. 61-2440) is an optimum filter medium having such characteristics.

When filled in the septic tank 1, the buoyant filter media A collect in a filter bed Ab being a group of filter media A under the surface M of the sewage. Aerobic bacteria propagate in the filter bed Ab to purify the sewage. Preferably, the filter media A are filled in the septic tank 1 in 55 to 60% by volume of the sewage.

The septic tank 1 is in a box form enclosed by broken lines of an upper wall 41, a bottom wall 42 and four side walls 43. A sewage supply pipe 9 and a treated water discharge pipe 10 are connected to the front side wall 43 and a rear side wall 43, respectively. A meshed or latticed bottom plate 7 is disposed slightly above the bottom wall 42 so as to keep the filter media A away therefrom when the septic tank 1 is drained of the sewage.

The circulation passage 3p is defined by a tube 3 having opposite open ends 3u and 3d, and suspended in the septic tank 1 in a vertical position with the upper end 3u submerged at a distance La from the surface M and with the lower end 3d a distance Lb above the bottom line BL of the filter bed Ab. Preferably, the inside diameter of the tube 3 and the distance Lb are twice the diameter of the filter media A or greater, and the distance La is equal to or greater than the diameter of the filter media A to secure the smooth circulation of the filter media A. The tube 3 may be either a circular tube or a square tube.

An air injection pipe 4 for injecting air into the sewage is inserted in the circulation passage 3p with its nozzle 4 disposed in the lower portion of the circulation passage 3p.

A sludge settling pit 11 is formed below the circulation passage 3p in the bottom wall 42. The sludge accumulated in the pit 11 is discharged by a suction unit 12 connected to a pump P3.

Diffusion pumps P4 disposed in the opposite lower ends of the septic tank 1 supplies air for aeration and for urging the sludge precipitated in portions of the bottom wall 42 other than the pit 11 to collect the sludge in the pit 11.

The diffusion pumps P4 are disposed in maintenance spaces 45 formed by partitioning the interior of the septic tank 1 by partition walls 44. Manholes 46 are formed at the upper ends of the maintenance space 45, respectively.

The circulating filter type sewage disposal apparatus D1 thus constructed is able to prevent the clogging of the filter media A with sludge effectively by continuously circulating the filter media A.

Bubbles of air injected into the sewage by the air injection pipe 12 rise through the circulation passage 3p to generate sewage currents S continuously through the circulation passage 3p by the buoyancy of the bubbles in order that the filter media A are circulated continuously. More concretely, the buoyant filter media A collect under the surface M of the sewage having the bottom line BL, and a portion of the bottom line BL below the lower and 3d of the tube 3 is deformed in the shape of a funnel as the sewage currents are generated. Then, the filter media A floating along the funnel-shaped surface flow sequentially into the circulation passage 3p, rise through the circulation passage 3p and flow out of the circulation passage 3p through the upper end 3u of the same. The filter media A floating on the surface M are dispensed by impulsive force generated by the bursting filter media A, and then the filter media A flow downward to the funnel-shaped bottom surface of the filter bed Ab. Thus, the filter bed Ab is caused to roll gradually in a manner like glacial movement by the sewage current S. The velocity of the sewage currents S can be optionally regulated by regulating air injection rate according to the sludge concentration of the sewage or the degree of purification. Experimental operation of the circulating filter type sewage disposal apparatus D1 for purifying sewage of an ordinary sludge concentration showed that the circulation of the filter media A at a rate of several filter media A per minute is sufficiently effective.

Furthermore, the circulating filter type sewage disposal apparatus D1 is capable of continuously and automatically removing sludge from the filter media A and of efficiently recovering the sludge removed from the filter media A without allowing the sludge to disperse in the septic tank 1.

Concretely, the bubbles formed by injecting air into the circulation passage 3p generate the sewage currents and, at the same time, applies intensive vibrations to the filter media A flowing together with the sewage currents, whereby sludge is removed efficiently from the filter media A. The sludge thus removed from the filter media A in the circulation passage 3p is prevented from dispersing in the septic tank 1 by the tube 3 defining the circulation passage 3p and, consequently, the sludge precipitates and settles in the pit 11. The suction unit 12 discharges the sludge settled in the pit 11.

A small portion of the sludge adhering to the filter media A falls off the filter media A in regions outside the circulation passage 3p as well as from those flowing through the circulation passage 3p, and sludge contained in the sewage precipitates directly. Sludge settled in areas on the bottom wall 42 other than an area forming the pit 11 is gathered in the pit 11 by the diffusion pumps P4 and is discharged by the suction unit 12.

### Second Embodiment

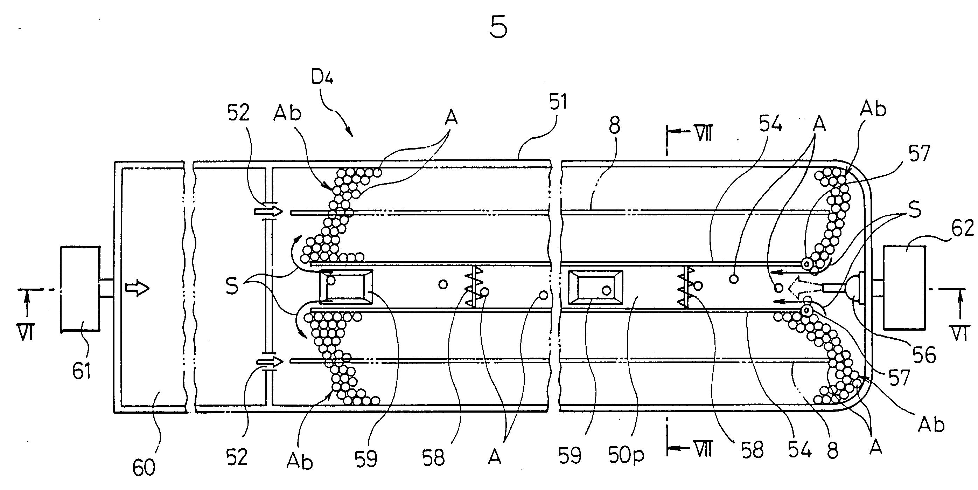

A circulating filter type sewage disposal apparatus D2 in a second embodiment according to the present invention shown in Fig. 3 is substantially the same in construction as the circulating filter type sewage disposal apparatus D1 in the first embodiment, except that the circulating filter type sewage disposal apparatus D2 is provided with a plurality of circulation passages 3p.

### Third Embodiment

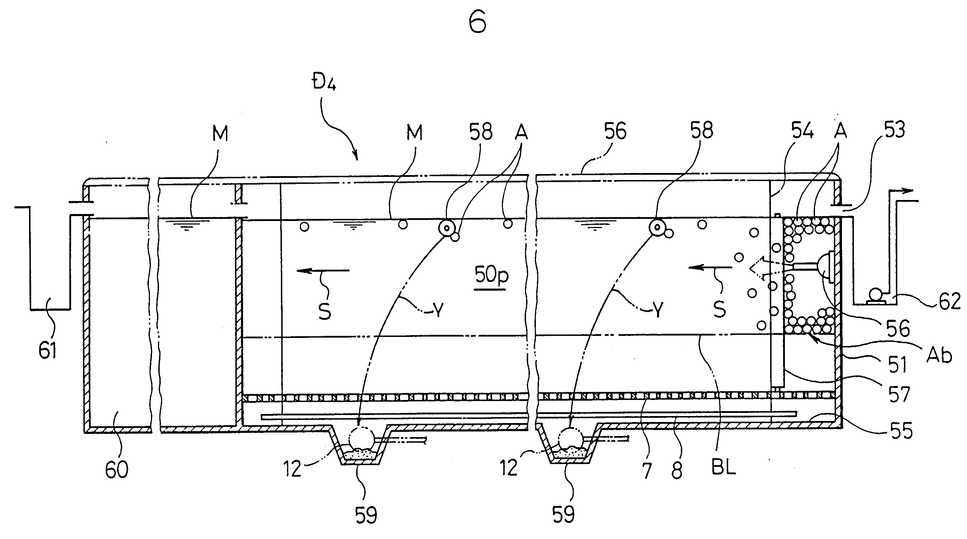

A circulating filter type sewage disposal apparatus D3 in a third embodiment according to the present invention shown in Fig. 4 is substantially the same in construction as the circulating filter type sewage disposal apparatus in the first embodiment, except that the circulating filter type sewage disposal apparatus D3 employs diffusion pipes 8 instead of the diffusion pumps P4 of the first embodiment, and is not provided with the partition walls 44 defining the maintenance spaces 45, and the manholes 46.

### Fourth Embodiment

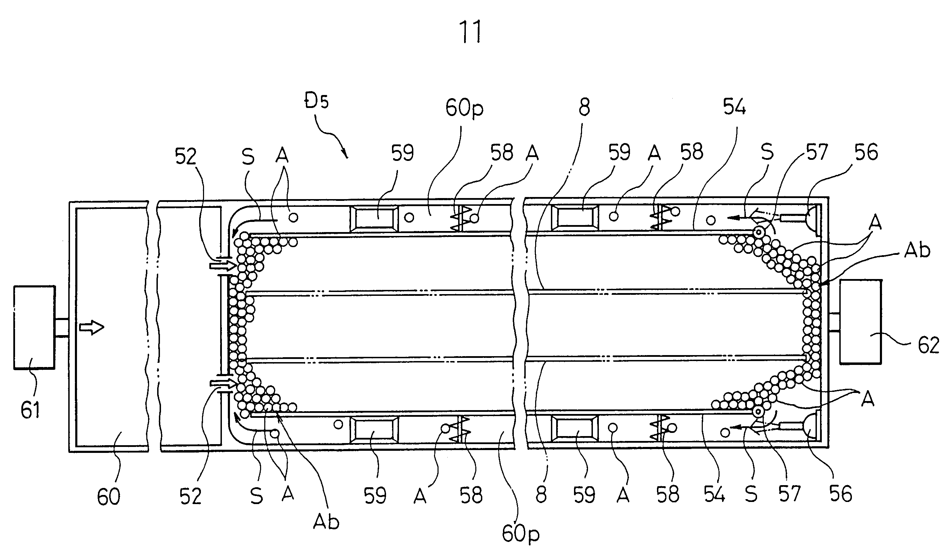

A circulating filter type sewage disposal apparatus D4 in a fourth embodiment according to the present invention is suitable for installation near a river R as shown in Fig. 9 for the large-scale purification of river water.

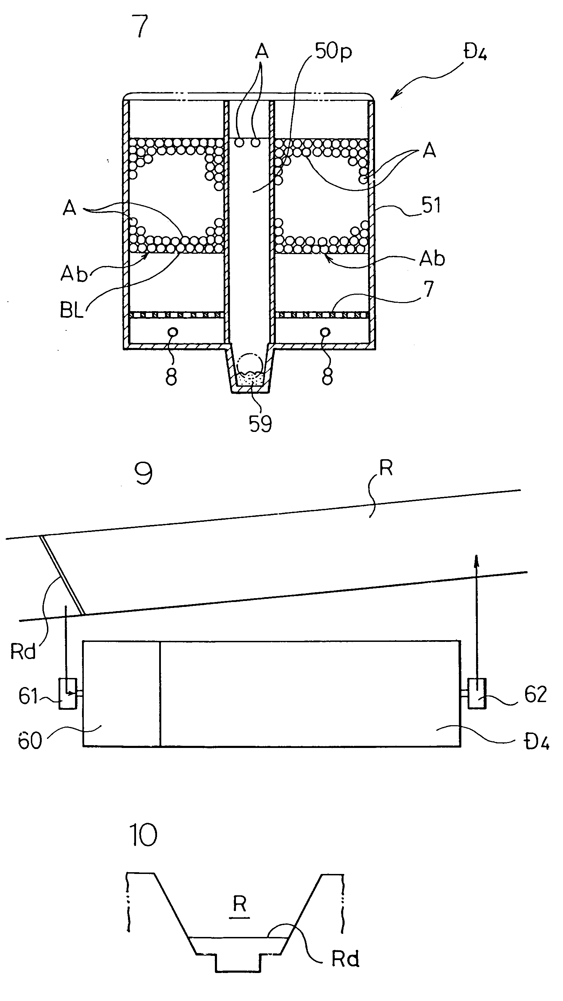

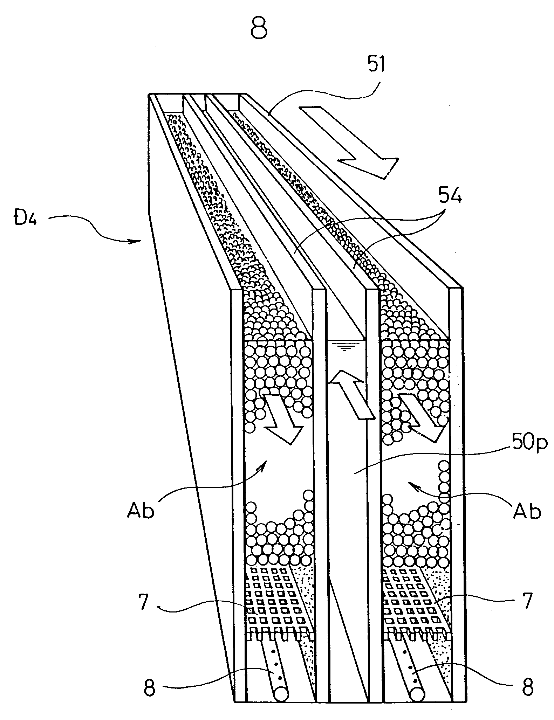

Concretely, the circulating filter type sewage disposal apparatus D4 is provided with a horizontal circulation passage 50P instead of the vertical circulation passage 3p of the circulating filter type sewage disposal apparatus D1 in the first embodiment. The circulation passage 50P is defined by a pair of parallel partition walls 54 set in a septic tank 51 along the flowing direction of the sewage, which flows into the septic tank 51 through a sewage inlet 52 and flows toward a purified water outlet 53 (Fig. 6).

The partition walls 54 extend between the bottom wall 55 and top wall 56 of the septic tank 51 so as to separate the circulation passage 50P formed in the central portion of the septic tank 51 completely from the other portions of the interior of the septic tank 51.

Water currents S flowing reverse to the flow of the sewage is formed in the circulation passage 50P by sewage current generating means 56 to circulate filter media A together with the sewage currents S. The filter media A that flow together with the sewage currents S form a fluidic filter bed Ab similar to that of the first embodiment The circulation velocity of the filter media A is determined according to the condition of the sewage and process conditions. Ordinarily, an appropriate circulation velocity is such that makes the filter media A circulate through the circulation passage 50P once a week or a month.

A pair of rotary guides 57 are disposed oppositely at the inlet of the circulation passage 50P to guide the filter media A into the circulation passage 50P.

Vibrating means 58 are arranged at appropriate intervals in the circulation passage 50P to vibrate the filter media A, and sludge settling pits 59 are disposed in the circulation passage 50P a predetermined distance downstream the vibrating means 58 with respect to the direction of the sewage currents in combination with the vibrating means 58, respectively. The sludge settling pits 59 are separated the predetermined distance apart from the vibrating means 58, respectively, because sludge removed from the filter media A is caused to flow downstream by the sewage currents and precipitates along paths indicated at Y in Fig. 6. The sludge settled in the pits 59 is discharged by the same manner as that employed in the first embodiment.

Since the sludge is removed from the filter media A in specific regions in the circulation passage 50P separated from the other portions of the interior of the septic tank, the sludge can be efficiently removed from the filter media A without dispersing the sludge in the entire interior of the septic tank, which further enhances clogging preventing effect and sewage disposal efficiency.

A settling tank 60 is disposed on the sewage inlet side of the circulating filter type sewage disposal apparatus D4 to supply the sewage to the circulating filter type sewage disposal apparatus D4 after removing large contaminants unsuitable for filtration contained in the sewage. An intake pit 61 is disposed before the settling tank 60 to supply the river water diverted by a weir Rd constructed in the rivet R through the intake pit 61 to the settling tank 60. A discharge pint 62 is provided on the side of the purified water outlet 53 of the circulating filter type sewage disposal apparatus D4 to return purified water to the river R through the discharge pit 62.

### Fifth Embodiment

A circulating filter type sewage disposal apparatus D5 in a fifth embodiment according to the present invention is a modified embodiment of the fourth embodiment and is substantially the same in construction as the circulating filter type sewage disposal apparatus D4, except that the circulating filter type sewage disposal apparatus D5 is provided with the pair of circulation passages 60P similar to the circulation passage 50P along the opposite side walls, respectively, of a septic tank 51.

### CAPABILITY OF EXPLOITATION IN INDUSTRY

The circulating filter type sewage disposal apparatus in accordance with the present invention generates sewage currents in a circulation passage (or passages) formed by partitioning the interior of the septic tank by current generating means to circulate the filter media regularly and continuously through the circulation passage (or passages) so that the clogging of the filter media can be effectively prevented. The regular circulation of the filter media enables continuously removing sludge from the filter media without dispersing the sludge in the septic tank, which improves the efficiency of sewage purification by filtration remarkably.

## Claims

1. A circulating filter type sewage disposal method employing a septic tank (1, 51) containing many buoyant filtering media (A) to form a filter bed, and utilising bacteria propagated in the filter bed, said sewage disposal method comprising
forming at least one elongate circulation passage (3p, 50p) by means of at least one tube or pair of partition walls (3, 54) in the septic tank extending from an end of the filter bed to an opposite end thereof for circulating the filter media therethrough, and
generating sewage currents in the circulation passage by current generating means (4, 56) to circulate the filter media through the circulation passage,
characterised by circulating the filter media sequentially several at a time through the at least one circulation passage by causing the filter bed to roll gradually as a result of the sewage currents and respective ones of the filter media floating at said one end of the filter bed to flow into one end of the at least one circulation passage, collecting sludge precipitated from the filter media circulating within the circulation passage, and thereafter dispensing the filter media from the other end of the at least one circulation passage to said opposite end of the filter bed, wherein sludge is prevented by means of the at least one circulation passage from dispersing within the septic tank and only a small proportion of sludge is precipitated outside the at least one circulation passage.

2. A circulating filter type sewage disposal method according to claim 1, characterised in that said circulation passage is a vertical circulation passage (3p) defined by a tubular member (3) having opposite open ends and disposed in a vertical position.

3. A circulating filter type sewage disposal method according to claim 2, characterised in that air is supplied in bubbles through the lower open end of the tubular member into the circulation passage to generate the sewage currents by the buoyancy of the bubbles.

4. A circulating filter type sewage disposal method according to claim 1, characterised in that said circulation passage is a horizontal circulation passage (50p) defined by a plurality of partition walls (54) set in the septic tank, and sewage currents reverse to a flowing direction of incoming sewage are generated in the circulation passage.

5. A circulating filter type sewage disposal method according to claim 4, characterised in that the circulation passage is formed in the central portion of the septic tank.

6. A circulating filter type sewage disposal method according to claim 1, characterised by a pair of the circulation passages (50p) formed horizontally along the opposite side walls, respectively, of the septic tank by respective partition walls (54) and sewage currents reverse to a flowing direction of incoming sewage are generated in the circulation passages.

7. A circulating filter type sewage disposal apparatus including a septic tank containing many buoyant filter media to form a filter bed, said circulating filter type sewage disposal apparatus comprising:
means comprising at least one pair of partition walls defining at least one elongate circulation passage for the filter media positioned to extend from an end of the filter bed to an opposite end thereof in the septic tank; and
current generating means for generating sewage currents to circulate the filter media through the circulation passage,
characterised in that the circulation passage (50p) is formed horizontally by a plurality of partition walls (54) set in the septic tank, and the current generating means comprise vibrating means (58) for vibrating the filter media provided in the circulation passage to generate sewage currents reverse to a flowing direction of incoming sewage in the circulation passage so as to circulate the filter media sequentially several at a time through the at least one circulation passage, and in that collection means are provided for sludge precipitated from the filter media circulating within the circulation passage, the collection means comprising pit means provided at a predetermined distance downstream from the vibrating means, wherein the arrangement is such that sludge is prevented by means of the at least one circulation passage from dispersing within the septic tank and only a small proportion of sludge is precipitated outside the at least one circulation passage.

8. A circulating filter type sewage disposal apparatus according to claim 7, characterised in that said circulation passage is a single circulation passage formed in the central portion of the interior of the septic tank.

9. A circulating filter type sewage disposal apparatus according to claim 7, characterised in that a pair of circulation passages (54) are formed horizontally along the opposite side walls, respectively, of the septic tank by respective partition walls, and the generating means are arranged to generate sewage currents reverse to a flowing direction of incoming sewage in the circulation passages.

## Patentansprüche

1. Verfahren zur Abwasserreinigung vom Typ des zirkulierenden Filtermediums unter Verwendung eines biologischen Klärtanks (1, 51), der viele schwimmfähige Filtermedien (A) zur Bildung eines Filterbettes enthält, und unter Verwendung von sich in dem Filterbett ausbreitenden Bakterien, wobei folgende Verfahrensschritte stattfinden
Bildung zumindest einer länglichen Zirkulationspassage (3p, 50p) mittels mindestens eines Rohres oder Paares von Trennwänden (3, 54) in dem Klärtank, wobei sich die Zirkulationspassage von einem Ende des Filterbettes zu einem gegenüberliegenden Ende desselben erstreckt, um die Filtermedien hindurchzirkulieren zu lassen, und
Erzeugung von Abwasserströmungen in der Zirkulationspassage durch stömungserzeugende Mittel (4, 56), um die Filtermedien durch die Zirkulationspassage zirkulieren zu lassen,
dadurch gekennzeichnet,
daß die Filtermedien aufeinanderfolgend, mehrere gleichzeitig, durch die zumindest eine Zirkulationspassage zirkulieren, indem das Filterbett veranlaßt wird sich allmählich umzuwälzen als Ergebnis der Stömungen des Abwassers und der Filtermedien, die an dem genannten einen Ende des Filterbettes schwimmen und in das eine Ende der zumindest einen Zirkulationspassage einströmen, wobei der Schlamm, der sich von den in der Zirkulationspassage zirkulierenden Filtermedien absetzt, gesammelt wird, und danach die Filtermedien von dem anderen Ende der zumindest einen Zirkulationspassage zu dem genannten gegenüberliegenden Ende des Filterbettes geleitet werden und wobei der Schlamm mit Hilfe der zumindest einen Zirkulationspassage daran gehindert wird, sich in dem Klärtank auszubreiten und nur eine kleine Schlammmenge außerhalb der zumindest einen Zirkulationspassage niedergeschlagen wird.

2. Verfahren zur Abwasserreinigung vom Typ des zirkulierenden Filtermediums nach Anspruch 1,
dadurch gekennzeichnet,
daß die genannte Zirkulationspassage eine vertikale Zirkulationspassage (3p) ist, die durch ein rohrartiges Teil (3) mit gegenüberliegenden offenen Enden gebildet wird und in einer Vertikalposition angeordnet ist.

3. Verfahren zur Abwasserreinigung vom Typ des zirkulierenden Filtermediums nach Anspruch 2,
dadurch gekennzeichnet,
daß Luft in Form von Blasen durch das untere offene Ende des rohrförmigen Teiles in die Zirkulationspassage geleitet wird, um die Abwasserströmungen mittels des Blasenauftriebes zu erzeugen.

4. Verfahren zur Abwasserreinigung vom Typ des zirkulierenden Filtermediums nach Anspruch 1,
dadurch gekennzeichnet,
daß die genannte Zirkulationspassage eine horizontale Zirkulationspassage (50p) ist, die durch mehrere in den Klärtank eingesetzte Trennwänden (54) gebildet wird, und daß die Abwasserströmungen entgegengesetzt zur Fließrichtung des eingeleiteten Abwassers in der Zirkulationspassage erzeugt werden.

5. Verfahren zur Abwasserreinigung vom Typ des zirkulierenden Filtermediums nach Anspruch 4,
dadurch gekennzeichnet,
daß die Zirkulationspassage im Zentralbereich des Klärtanks gebildet wird.

6. Verfahren zur Abwasserreinigung vom Typ des zirkulierenden Filtermediums nach Anspruch 1,
gekennzeichnet durch ein Paar von Zirkulationspassagen (50p), die horizontal entlang den gegenüberstehenden Seitenwänden des Klärtanks mittels entsprechender Trennwände (54) gebildet werden, und daß die Abwasserströmungen entgegen der Strömungsrichtung des zugeführten Abwassers in den Zirkulationspassagen erzeugt werden.

7. Vorrichtung zur Abwasserreinigung vom Typ des zirkulierenden Filtermediums mit einem Klärtank, der viele schwimmfähige Filtermedien zur Bildung eines Filterbettes enthält, wobei diese Vorrichtung folgende Merkmale aufweist:
zumindest ein Paar Trennwände, die zumindest eine längliche Zirkulationspassage für die Filtermedien bilden unter Erstreckung von einem Ende des Filterbettes zu einem gegenüberliegenden Ende desselben in dem Klärtank; und
strömungserzeuende Mittel zur Erzeugung von Abwasserströmungen, um die Filtermedien durch die Zirkulationspassage zirkulieren zu lassen,
dadurch gekennzeichnet,
daß die Zirkulationspassage (50p) horizontal verläuft und durch mehrere von Trennwände (54), die in den Klärtank eingesetzt sind, gebildet wird, und daß die strömungserzeugenden Mittel Vibrationsmittel (58) enthalten, um die in der Zirkulationspassage befindlichen Filtermedien in Vibration zu versetzen und Abwasserströmungen in der Zirkulationspassage zu erzeugen, entgegengesetzt zur Fließrichtung einströmenden Abwassers, so daß die Filtermedien aufeinanderfolgend und mehrere zur gleichen Zeit durch die zumindest eine Zirkulationspassage zirkulieren, und daß Sammelmittel für den Schlamm vorgesehen sind, der von den innerhalb der Filterpassage zirkulierenden Filtermedien ausgeschieden, daß die Sammelmittel grubenartige Vertiefungen aufweisen, die in vorgegebenem Abstand strömungsabwärts von den Vibrationsmitteln angeordnet sind, wobei die Anordnung so gewählt ist, daß der Schlamm durch die zumindest eine Zirkulationspassage davon abgehalten wird, sich innerhalb des Klärtanks auszubreiten und nur eine kleine Schlammenge außerhalb der zumindest einen Zirkulationspassage niedergeschlagen wird.

8. Vorrichtung zur Abwasserreinigung vom Typ des zirkulierenden Filtermediums nach Anspruch 7,
dadurch gekennzeichnet,
daß die genannte Zirkulationspassage eine einzige Zirkulationspassage ist, die im Zentralbereich im Inneren des Klärtanks angeordnet ist.

9. Vorrichtung zur Abwasserreinigung vom Typ des zirkulierenden Filtermediums nach Anspruch 7,
dadurch gekennzeichnet,
daß ein Paar von Zirkulationspassagen (54) horizontal entlang gegenüberstehender Seitenwände des Klärtanks durch entsprechende Trennwände gebildet ist und daß die strömungserzeugenden Mittel Abwasserstömungen erzeugen entgegen der Fließrichtung des zugeführten Abwassers in den Zirkulationspassagen.

## Revendications

1. Procédé de rejet d'eaux usées du type à circulation sur filtre utilisant un réservoir septique (1,51) contenant de nombreux éléments filtrants flottants (A) pour former un lit de filtration, et utilisant des bactéries propagées dans le lit de filtration, ledit procédé de rejet d'eaux usées comprenant :
- la formation d'au moins un passage de circulation allongé (3p, 50p) au moyen d'au moins un tube ou d'une paire de cloisons de division (3,54) dans le réservoir septique, s'étendant d'une extrémité du lit de filtration à une extrémité opposée de celui-ci, pour y faire circuler, d'un côté à l'autre, lesdits éléments filtrants, et
- la génération de courant d'eaux usées dans le passage de circulation par des moyens générateurs de courant (4,56) pour faire circuler les éléments filtrants au travers du passage de circulation,
caractérisé en ce qu'il consiste à faire circuler les éléments filtrants successivement et plusieurs fois au travers dudit "au moins un" passage de circulation en faisant que le lit de filtration roule progressivement par suite des courants d'eaux usées et que certains des éléments filtrants flottants à ladite une extrémité du lit de filtration s'écoulent jusque dans une extrémité dudit "au moins" un passage de circulation, à récupérer la boue précipitée depuis les éléments filtrants circulant dans le passage de circulation, puis à distribuer les éléments filtrants depuis l'autre extrémité dudit "au moins un" passage de circulation vers l'extrémité opposée du lit de filtration, la boue étant empêchée, au moyen dudit "au moins un" passage de circulation de se disperser à l'intérieur du réservoir septique et seule une petite proportion de la boue est précipitée à l'extérieur dudit "au moins un" passage de circulation.

2. Procédé de rejet d'eaux usées du type à circulation sur filtre selon la revendication 1, caractérisé en ce que ledit passage de circulation est un passage de circulation vertical (3p) défini par un élément tubulaire (3) ayant des extrémités ouvertes opposées et qui est disposé en position verticale.

3. Procédé de rejet d'eaux usées du type à circulation sur filtre selon la revendication 2, caractérisé en ce que de l'air est fourni sous la forme de bulles au travers de l'extrémité ouverte inférieure de l'élément tubulaire dans le passage de circulation pour générer, par la poussée des bulles, des courants d'eaux usées.

4. Procédé de rejet d'eaux usées du type à circulation sur filtre selon la revendication 1, caractérisé en ce que ledit passage de circulation est un passage de circulation horizontal (50p) défini par une série de parois de division (54) disposées dans le réservoir septique, et en ce que des courants d'eaux usées inverses à la direction d'écoulement des eaux usées qui arrivent sont générés dans le passage de circulation.

5. Procédé de rejet d'eaux usées du type à circulation sur filtre selon la revendication 4, caractérisé en ce que le passage de circulation est formé dans la partie centrale du réservoir septique.

6. Procédé de rejet d'eaux usées du type à circulation sur filtre selon la revendication 1, caractérisé par une paire de passages de circulation (50p) formés horizontalement le long, respectivement, des parois latérales opposées du réservoir septique par des cloisons de séparation respectives (54) et en ce que des courants d'eaux usées inverses à la direction d'écoulement des eaux usées qui arrivent sont générés dans les passages de circulation.

7. Appareil de rejet d'eaux usées du type à circulation sur filtre comprenant un réservoir septique contenant de nombreux éléments filtrants flottants pour former un lit de filtration, ledit appareil de rejet d'eaux usées du type à circulation sur filtre comprenant :
- des moyens formés d'au moins une paire de parois de division définissant au moins un passage de circulation allongé pour des éléments filtrants disposés pour s'étendre d'une extrémité du lit de filtration à une extrémité opposée de celui-ci dans le réservoir septique, et
- des moyens générateurs de courants pour générer des courants d'eaux usées pour faire circuler les éléments filtrants au travers du passage de circulation,
caractérisé en ce que le passage de circulation (50p) est formé horizontalement par une série de cloisons de division (54) disposés dans le réservoir septique, et en ce que les moyens de génération de courants sont constitués de moyens vibrants (58) pour faire vibrer les éléments filtrants prévus dans le passage de circulation pour générer des courants d'eaux usées inverses à la direction d'écoulement des eaux usées qui arrivent dans le passage de circulation de façon à faire circuler les éléments filtrants successivement et plusieurs fois au travers dudit "au moins un" passage de circulation, et en ce que des moyens de récupération sont prévus pour la boue précipitée à partir des éléments filtrants circulant à l'intérieur du passage de filtration, les moyens de récupération comprenant des moyens formant cavité prévus à une distance déterminée en aval des moyens vibrants, la disposition étant telle que la boue est empêchée par ledit "au moins un" passage de circulation de se disperser à l'intérieur du réservoir septique et que seule une petite proportion de boue est précipitée à l'extérieur dudit "au moins un" passage de circulation.

8. Appareil de rejet d'eaux usées du type à circulation sur filtre selon la revendication 7, caractérisé en ce que ledit passage de circulation est un passage de circulation unique formé dans la partie centrale de l'intérieur du réservoir septique.

9. Appareil de rejet d'eaux usées du type à circulation sur filtre selon la revendication 7, caractérisé en ce qu'une paire de passages de circulation (54) est formée horizontalement le long, respectivement, des parois latérales opposées du réservoir septique par des cloisons de division respectives, et en ce que les moyens de génération sont disposés pour générer des courants d'eaux usées inverses à la direction d'écoulement des eaux usées qui arrivent dans les passages de circulation.
